# DEMANDE DE BREVET EUROPEEN

(11) **EP 1 748 224 A2**
(43) Date de publication de la demande: **31.01.2007**
(21) Numéro de dépôt: 06300757.9
(22) Date de dépôt: 05.07.2006
(51) Int. Cl.: F16H 7/12

(54) **Dispositif de mise sous tension d'une courroie**

(30) Priorité: 06.07.2005 FR 0552067
(71) Demandeur: PEUGEOT CITROËN AUTOMOBILES S.A., 78140 Velizy Villacoublay (FR)
(72) Inventeur: Dore, Martial, 78000 Versailles (FR)
(74) Mandataire: Ménès, Catherine

(57) **Abrégé**

Dispositif de mise sous tension d'une courroie (20), comprenant deux bras (32, 33) reliés à un axe (A) de pivotement fixe, chaque bras (32, 33) étant appliqué par une extrémité sur un brin (22, 23) de ladite courroie (20).

Selon l'invention, lesdits bras (32, 33) sont articulés l'un par rapport à l'autre autour dudit axe (A) de pivotement, et en ce qu'ils comprennent des moyens de fixation de l'un sur l'autre.

Application aux systèmes d'assistance au démarrage d'un moteur thermique d'un véhicule.

## Description

La présente invention concerne un dispositif de mise sous tension d'une courroie.

L'invention trouve une application particulièrement avantageuse dans le domaine de l'automobile, notamment dans les systèmes d'assistance au démarrage d'un moteur thermique d'un véhicule.

Un certain nombre de véhicules automobiles sont aujourd'hui équipés d'un système d'assistance au démarrage du moteur thermique. Cette fonction, connue sous le terme anglo-saxon de « Stop & Start », consiste à arrêter le moteur thermique lorsque le véhicule est à l'arrêt, et à le redémarrer automatiquement au moyen d'un alternateur réversible.

Dans ce type de véhicules, l'alternateur est relié par une courroie à une poulie du vilebrequin du moteur et, éventuellement, au compresseur de climatisation. On entend sous le terme d'« alternateur réversible » une machine électrique capable de fonctionner, d'une part, de manière standard, c'est-à-dire en mode générateur, lorsque le vilebrequin entraîne l'alternateur et le compresseur via la courroie, et, d'autre part, en mode démarrage, l'alternateur entraînant alors les autres composants au moyen de la même courroie, en particulier le vilebrequin afin de procéder à l'allumage du moteur.

D'une manière générale, lorsque qu'une courroie est entraînée par une poulie, il apparaît d'un côté de la poulie un brin tendu le long duquel la courroie est le siège d'une tension supérieure à la tension au repos, et de l'autre côté de la poulie un brun mou le long duquel la courroie est plus lâche, la tension étant inférieure à la tension au repos. Les dispositifs habituels de mise sous tension d'une courroie comportent le plus souvent un galet tendeur dont le rôle est d'appliquer une tension complémentaire sur le brin mou afin d'éviter les effets néfastes d'une courroie qui resterait sous-tendue.

Dans le cas de la poulie de l'alternateur réversible d'un système « Stop & Start », la difficulté est que, selon le mode de fonctionnement de l'alternateur, générateur ou moteur, un même brin de la courroie peut être à la fois un brin tendu ou un brin mou. On comprend alors qu'un système à simple galet tendeur ne peut convenir.

Pour résoudre cette difficulté, la demande internationale WO 2005/012765 propose un dispositif de mise sous tension de la courroie, réalisé au moyen d'un tendeur composé d'un double bras capable de pivoter en son centre autour d'un axe fixe. Un galet rotatif disposé à l'extrémité de chaque bras est appliqué sur chaque brin de la courroie. A la pose du dispositif, une certaine tension est exercée sur la courroie. En fonctionnement, les tensions sur les brins s'équilibrent automatiquement autour de la tension de pose, du fait que, par exemple, une tension exercée sur le bras correspondant par un brin en situation de brin tendu est transmise par l'autre bras du système à l'autre brin, lequel se tend alors qu'il était initialement en situation de brin mou.

Cependant, ce système de mise sous tension connu présente un inconvénient majeur qui réside dans la difficulté d'appliquer la tension initiale de pose.

C'est pour résoudre cette difficulté que l'invention propose un dispositif de mise sous tension d'une courroie, comprenant deux bras reliés à un axe de pivotement fixe, chaque bras étant appliqué par une extrémité sur un brin de ladite courroie, remarquable, selon l'invention, en ce que lesdits bras sont articulés l'un par rapport à l'autre autour dudit axe de pivotement, et en ce qu'ils comprennent des moyens de fixation de l'un sur l'autre.

Ainsi, comme on le verra en détail plus loin, lors de l'application de la tension initiale de pose, les deux bras peuvent être désolidarisés et rendus rotatifs l'un par rapport à l'autre de manière indépendante autour de l'axe de pivotement. Puis, la tension de pose étant obtenue, les bras sont solidarisés l'un à l'autre par lesdits moyens de fixation, formant alors un seul bloc fonctionnel.

Selon un mode de réalisation facilitant la mise sous tension de la courroie, au moins un desdits bras comprend des moyens d'immobilisation en pivotement, et un autre bras comprend des moyens de mise sous tension de ladite courroie par pivotement autour dudit axe fixe.

Enfin, l'invention prévoit que lesdits moyens de fixation sont des moyens de vissage à travers des trous oblongs annulaires aménagés sur un bras autour de l'axe de pivotement.

La description qui va suivre en regard des dessins annexés, donnés à titre d'exemples non limitatifs, fera bien comprendre en quoi consiste l'invention et comment elle peut être réalisée.

La figure 1 est une vue d'ensemble d'un système de mise sous tension conforme à l'invention.

La figure 2a est une vue de détail d'un premier bras du système de la figure 1.

La figure 2b est une vue de détail d'un deuxième bras du système de la figure 1.

La figure 3 est une vue montrant un assemblage des bras des figures 2a et 2b.

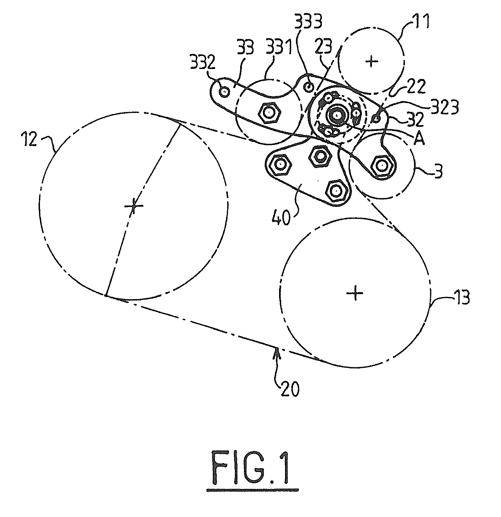

Sur la figure 1 est représenté un dispositif de mise sous tension d'une courroie 20 dans le cadre d'un système « Stop & Start » d'un véhicule automobile. Ce système comprend un alternateur réversible 11, un vilebrequin 12 et un compresseur 13 de climatisation. Ces trois composants sont desservis par la courroie 20.

En mode de fonctionnement standard, le vilebrequin est moteur dans le sens indiqué par la flèche et entraîne l'alternateur 11 qui alors est en configuration de générateur. Le brin 23 est le brin mou de la courroie 20 au niveau de l'alternateur 11.

En mode de fonctionnement démarrage, l'alternateur 11 est chargé d'entraîner le vilebrequin 12 afin de permettre l'allumage du moteur. Dans ce cas, le brin 23 devient un brin tendu et le brin 22 un brin mou de la courroie 20 au niveau de l'alternateur 11.

Le dispositif proposé sur la figure 1 a pour but d'assurer que les brins 22 et 23 restent toujours suffisamment tendus quel que soit le mode de fonctionnement de l'alternateur 11.

A cet effet, ledit dispositif comprend deux bras 32, 33 reliés à un axe A de pivotement supporté par une platine fixe 40. Un galet rotatif 3, 331 est disposé à l'extrémité de chaque bras 32, 33 et vient en contact direct avec la courroie 20 au cours de son déplacement.

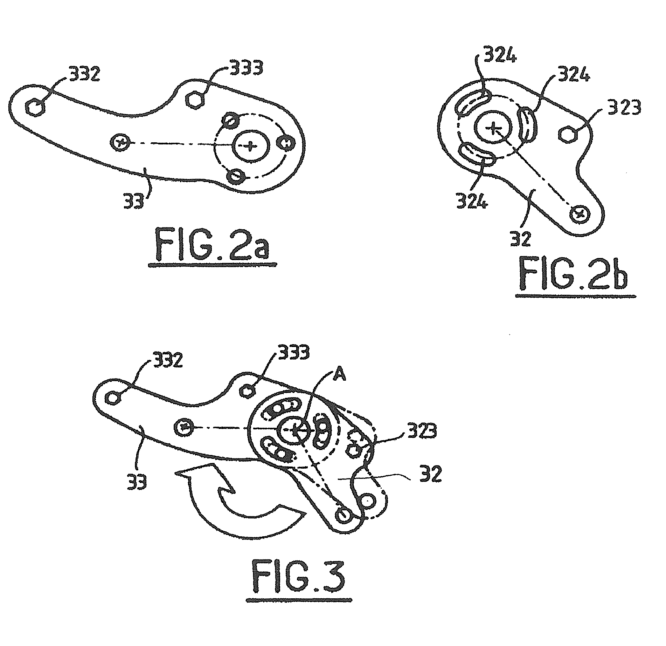

Les bras 32, 33 sont articulés l'un par rapport à l'autre autour de l'axe fixe A, mais il peuvent être solidarisés par des moyens de fixation qui seront décrits plus loin. Les figures 2a et 2b montrent des vues de détail des deux bras 32 et 33.

En fonctionnement, les bras 32, 33 sont solidarisés et assurent de ce fait qu'une tension suffisante soit appliquée aux brins 22, 23 que l'alternateur réversible 11 soit en mode générateur ou en mode de démarrage. Le dispositif de mise sous tension fonctionne alors par transfert de tensions. Par exemple, en mode démarrage de l'alternateur 11, la tension exercée par le brin 22 sur le bras 32 par l'intermédiaire du galet 3 est transmise au brin 23 par le bras 33 par l'intermédiaire du galet 331.

Lors de la pose du dispositif, les deux bras 32, 33 sont désolidarisés, de sorte qu'ils peuvent pivoter autour de l'axe A indépendamment l'un de l'autre, comme l'indique la figure 3.

La pose proprement dite est effectuée, par exemple, en immobilisant le bras 33 à l'aide d'un moyen d'immobilisation constitué par une empreinte 332. Puis, le bras 32 est amené par pivotement autour de l'axe A dans une position correspondant à une tension de courroie initiale donnée. Le mouvement de pivotement est réalisé au moyen d'un outil pouvant être placé dans des orifices 333 et 323 respectivement situés sur les bras 33 et 32.

La tension de pose étant ainsi obtenue, les deux bras 32, 33 sont solidarisés par vissage sur la platine 40 à travers notamment des trous oblongs 324 annulaires pratiqués dans le bras 32 autour de l'axe A. La forme oblongue de ces trous 324 donne la latitude de réglage nécessaire à l'ajustement de la tension de pose à la valeur souhaitée, ainsi que l'indique la flèche de la figure 3.

## Revendications

1. Dispositif de mise sous tension d'une courroie (20), comprenant deux bras (32, 33) reliés à un axe (A) de pivotement fixe, chaque bras (32, 33) étant appliqué par une extrémité sur un brin (22, 23) de ladite courroie (20), **caractérisé en ce que** lesdits bras (32, 33) sont articulés l'un par rapport à l'autre autour dudit axe (A) de pivotement, et **en ce qu'**ils comprennent des moyens de fixation de l'un sur l'autre.

2. Dispositif selon la revendication 1, **caractérisé en ce que** lesdits moyens de fixation sont des moyens de vissage à travers des trous oblongs annulaires aménagés (324) sur un bras (32) autour de l'axe (A) de pivotement.

3. Dispositif selon l'une des revendications 1 ou 2, **caractérisé en ce qu'**au moins un (33) desdits bras comprend des moyens (332) d'immobilisation en pivotement, et **en ce qu'**un autre bras (32) comprend des moyens (323) de mise sous tension de ladite courroie (20) par pivotement autour dudit axe fixe (A).

4. Utilisation du dispositif selon l'une des revendications 1 à 3 à une courroie d'alternateur dans un système d'assistance au démarrage d'un moteur thermique d'un véhicule.
